# EUROPÄISCHE PATENTSCHRIFT

(11) **EP 3 740 344 B1**
(45) Veröffentlichungstag und Bekanntmachung des Hinweises auf die Patenterteilung: **22.03.2023**
(21) Anmeldenummer: 19706857.0
(22) Anmeldetag: 16.01.2019
(51) Int. Cl.: B23Q 7/14, B23Q 1/48, B23Q 39/00

(54) **WERKZEUGMASCHINE ZUR SPANABHEBENDEN BEARBEITUNG VON WERKSTÜCKEN, SOWIE VERFAHREN ZUM WECHSELN EINER PALETTE AN EINER WERKZEUGMASCHINE**
MACHINE TOOL FOR MACHINING WORKPIECES, AND METHOD FOR CHANGING A PALLET IN A MACHINE TOOL
MACHINE-OUTIL POUR USINAGE DE PIÈCES PAR ENLÈVEMENT DE COPEAUX ET PROCÉDÉ DE CHANGEMENT DE PALETTE SUR UNE MACHINE-OUTIL

(30) Priorität: 17.01.2018 AT 500292018
(43) Veröffentlichungstag der Anmeldung: 25.11.2020
(73) Patentinhaber: Fill Gesellschaft m.b.H., 4942 Gurten (AT)
(72) Erfinder: DALLINGER, Friedrich, 4942 Gurten (AT)
(74) Vertreter: Burger, Hannes
(86) Internationale Anmeldenummer: PCT/AT2019/060014
(87) Internationale Veröffentlichungsnummer: WO 2019/140472

(56) Entgegenhaltungen:
- EP-A1- 2 945 776
- EP-A1- 3 117 955
- EP-B1- 2 945 776
- DE-A1-102009 011 672
- DE-B3-102016 107 648

## Beschreibung

Die Erfindung betrifft eine Werkzeugmaschine zur spanabhebenden Bearbeitung von Werkstücken, sowie ein Verfahren zum Wechseln einer Palette an einer Werkzeugmaschine.

Aus der EP2945776B1 ist eine Werkzeugmaschine bekannt, die eine Spindelaufnahme aufweist, welche in der X-Achse, in der Y-Achse und in der Z-Achse bewegbar ist. Weiters ist eine Schwenkbrücke vorhanden, an welcher ein Rundtisch angeordnet ist. Die Schwenkbrücke ist neben der Schwenkbarkeit nicht zusätzlich verschiebbar. Weiters ist eine Palettenwechselvorrichtung offenbart, die in der Y-Achse verschiebbar ist und um eine vertikale Achse drehbar ist.

Die in der EP2945776B1 beschriebene Werkzeugmaschine weist den Nachteil auf, dass aufgrund dessen Aufbau die Bearbeitungsgeschwindigkeit bzw. Bearbeitungsqualität beschränkt ist.

Die in der DE102016107648B3 offenbarte Werkzeugmaschine weist die im Oberbegriff des Anspruchs 1 genannten Merkmale auf.

Aufgabe der vorliegenden Erfindung war es, die Nachteile des Standes der Technik zu überwinden und eine Werkzeugmaschine und ein Verfahren zur Verfügung zu stellen, mittels derer ein Werkstück mit erhöhter Bearbeitungsgeschwindigkeit bearbeitet werden kann.

Diese Aufgabe wird durch eine Vorrichtung gemäß dem Anspruch 1 und ein Verfahren gemäß dem Anspruch 9 gelöst.

In einer Weiterbildung kann vorgesehen sein, dass die Werkzeugmaschine folgende Bauteile umfasst:
- eine Spindelaufnahme mit zumindest einer drehantreibbaren Werkzeugspindel, wobei die Werkzeugspindel zumindest entlang zwei aufeinander senkrecht stehender Achsen, insbesondere entlang einer horizontalen X-Achse und entlang einer senkrecht auf die X-Achse stehenden horizontalen Z-Achse, verschiebbar ist;
- ein Maschinenbett mit einer Schwenkbrücke, welche um eine zur X-Achse parallele A-Achse schwenkantreibbar gelagert ist, wobei an der Schwenkbrücke zumindest ein Rundtisch angeordnet ist, welcher um eine senkrecht auf die A-Achse stehende B-Achse drehantreibbar gelagert ist, wobei der Rundtisch zur Aufnahme einer Palette für zumindest eines der zu bearbeitenden Werkstücke ausgebildet ist;
- einen Bearbeitungsraum, welcher im Bereich der Schwenkbrücke ausgebildet ist und welcher durch ein in der Spindelaufnahme aufgenommenes Bearbeitungswerkzeug zugänglich ist.

Weiters ist ein Palettenspeicher ausgebildet, welcher in der Z-Achse zur Schwenkbrücke beabstandet angeordnet ist, wobei im Palettenspeicher mehrere in der Y-Achse übereinander angeordnete Palettenaufnahmefächer ausgebildet sind, welche zur Aufnahme von Paletten dienen, wobei zumindest eines der Palettenaufnahmefächer ein Horizontalausschubsystem aufweist, mittels dem eine im zugeordneten Palettenaufnahmefach aufgenommene Palette entlang der Z-Achse in den Bearbeitungsraum hinein verschiebbar ist, wodurch die Palette zur Übergabe an den Rundtisch bereitstellbar ist.

Die Schwenkbrücke ist erfindungsgemäß entlang einer senkrecht auf die X-Achse und die Z-Achse stehenden, vertikalen Y-Achse verschiebbar ausgebildet.

Die erfindungsgemäße Werkzeugmaschine weist den Vorteil auf, dass mit ihr Werkstücke schnell und exakt bearbeitet werden können. Darüber hinaus können die Paletten mit den daran angeordneten Werkstücken einfach in den Bearbeitungsraum der Werkzeugmaschine eingewechselt werden. Dadurch kann die Rüstzeit bzw. Nebenzeit der Werkzeugmaschine minimiert werden. Außerdem können die Paletten außerhalb des Bearbeitungsraumes mit Werkstücken bestückt werden und die fertig bestückten Paletten eingewechselt werden, wodurch das Rüsten der Paletten mit neuen Werkstücken parallel zum Bearbeitungsvorgang erfolgen kann.

Erfindungsgemäß ist die Schwenkbrücke entlang der Y-Achse relativ zu den Palettenaufnahmefächern verschiebbar, während die Palettenaufnahmefächer nicht entlang der Y-Achse verschiebbar ausgebildet sind. Durch diese Maßnahme kann die Werkzeugmaschine einen möglichst einfachen und somit kostengünstigen Aufbau aufweisen.

In einer Alternative, die nicht Teil er Erfindung ist, können die Palettenaufnahmefächer entlang der Y-Achse relativ zur Schwenkbrücke verschiebbar ausgebildet sein, während die Schwenkbrücke nicht entlang der Y-Achse verschiebbar ausgebildet ist. Die Palettenaufnahmefächer können dabei durch z.B. einen elektrischen Antrieb entlang der Y-Achse innerhalb des Palettenlagers verschiebbar sein. Durch diese Maßnahme kann die Werkzeugmaschine einen einfachen und somit kostengünstigen Aufbau aufweisen.

Alternativ dazu kann vorgesehen sein, wenn die Schwenkbrücke ausschließlich um die A-Achse schwenkbar ist und zusätzlich ausschließlich entlang der Y-Achse verschiebbar ist. Durch diese Maßnahme kann die Werkzeugmaschine relativ einfach und kostengünstig realisiert werden.

Ferner kann vorgesehen sein, dass zwei Werkzeugspindeln und zwei Rundtische ausgebildet sind, wobei jeweils eine der Werkzeugspindeln einem der Rundtische zugeordnet ist. Durch diese Maßnahme ist es möglich, dass an der Werkzeugmaschine zwei Werkstücke zeitgleich zueinander bearbeitet werden.

In einer Alternative, die nicht Teil der Erfindung ist, kann vorgesehen sein, dass die Werkzeugspindel ausschließlich entlang der X-Achse und der Z-Achse verschiebbar ist. Durch diese Maßnahme kann die Werkzeugmaschine einen möglichst einfachen und somit effizienten Aufbau aufweisen.

Alternativ dazu kann vorgesehen sein, dass die Werkzeugspindel entlang der X-Achse, der Y-Achse und der Z-Achse verschiebbar ist.

Gemäß einer Weiterbildung ist es möglich, dass jedes der Palettenaufnahmefächer ein Horizontalausschubsystem aufweist. Mittels dem Horizontalausschubsystem können die einzelnen Paletten entlang der Z-Achse verschoben werden.

Ferner kann es zweckmäßig sein, wenn das Horizontalausschubsystem mit einem Elektromotor, insbesondere einem Servomotor, antriebsgekoppelt ist. Von Vorteil ist hierbei, dass ein Elektromotor eine hohe Verfahrgeschwindigkeit und dabei eine große Stellgenauigkeit aufweisen kann. Der Elektromotor kann mit dem Horizontalausschubsystem beispielsweise mittels einem Zahnriemen oder etwa mittels einer Zahnstange gekoppelt sein.

Darüber hinaus kann vorgesehen sein, dass das Horizontalausschubsystem eine Palettenhalterung aufweist, die zur formschlüssigen Aufnahme der Palette ausgebildet ist. Von Vorteil ist hierbei, dass die einzelnen Paletten in der Palettenhalterung aufgenommen werden können. Weiters kann vorgesehen sein, dass an einer Stirnseite der Palettenhalterung eine Haltenase ausgebildet ist, in welche die Palette einhängbar ist.

Gemäß einer besonderen Ausprägung ist es möglich, dass die Palettenhalterung mit Ausschubschienen gekoppelt ist, welche, insbesondere an einer Seitenwand, im Palettenspeicher befestigt sind oder dass die Ausschubschienen an einer Höhenverstellvorrichtung gekoppelt sind, welche entlang der Y-Achse im Palettenspeicher verschiebbar ausgeführt ist. Mittels der Ausschubschienen kann die Palettenhalterung einfach in den Bearbeitungsraum eingeschoben werden. Hierbei ist es auch denkbar, dass die Ausschubschienen teleskopierbar sind.

Entsprechend einer vorteilhaften Weiterbildung kann vorgesehen sein, dass der Palettenspeicher an ein Palettenzuliefersystem gekoppelt ist, mittels welchem die einzelnen Palettenaufnahmefächer mit Paletten bestückbar sind. Dies bringt den Vorteil mit sich, dass die Paletten automatisiert in den Palettenspeicher bestückt werden können.

Insbesondere kann es vorteilhaft sein, wenn die Paletten mittels dem Horizontalausschubsystem entlang der Z-Achse an der zum Bearbeitungsraum gegenüberliegenden Seite oder entlang der X-Achse seitlich aus dem Palettenspeicher ausgeschoben werden können. Durch diese Maßnahme kann erreicht werden, dass die einzelnen Paletten zur Bestückung durch einen Benutzer aus dem Palettenspeicher hinausgeschoben werden können.

Alternativ dazu kann vorgesehen sein, dass zum Entfernen oder Einlegen einer Palette in den Palettenspeicher, alle Paletten bis auf diejenige Palette, die eingewechselt werden soll aus dem Palettenspeicher ausgeschoben werden, sodass die Palette die eingewechselt werden soll von oben zugänglich ist. Diese Palette kann somit mittels einem Kran aus dem Palettenspeicher herausgehoben werden. Der Palettenspeicher kann hierbei von oben zugänglich sein.

Weiters kann vorgesehen sein, dass die von oben zugänglichen Paletten mittels einem Kran, einem Manipulator, oder auch manuell mit Werkstücken gerüstet werden. Der Kran oder Manipulator kann hierbei einen Doppelgreifer aufweisen, der bearbeitete Werkstücke entnehmen kann und neue Werkstücke einlegen kann. Insbesondere können unterschiedlichste Werkstücke in die Palette eingelegt werden. Beispielsweise kann auch vorgesehen sein, dass in einer Palette mehrere unterschiedliche Werkstücke aufgenommen sind.

Weiters kann vorgesehen sein, dass der Palettenspeicher und der Aufnahmeraum durch ein öffenbares Trennelement voneinander getrennt sind. Das Trennelement kann beispielsweise als Rolltor ausgebildet sein. Alternativ dazu kann das Trennelement beispielsweise als Schiebeelement ausgebildet sein.

Erfindungsgemäß ist auch ein Verfahren zum Wechseln einer Palette an einer Werkzeugmaschine gemäß dem Anspruch 9 vorgesehen.

Das erfindungsgemäße Verfahren weist den Vorteil auf, dass der Palettenwechsel einfach erfolgen kann.

Erfindungsgemäß ist vorgesehen, dass die Relativpositionierung der Schwenkbrücke, ausschließlich durch Verschieben der Schwenkbrücke entlang der vertikalen Y-Achse unterhalb des Niveau jenes Palettenaufnahmefaches, aus welchem die Palette eingewechselt werden soll, erfolgt und dass die Aufnahme der Palette am Rundtisch dadurch erfolgt, dass die Schwenkbrücke entlang der vertikalen Y-Achse nach oben verschoben wird, bis die Palette am Rundtisch aufgenommen ist.

Die genannten Verfahrensschritte weisen den Vorteil auf dass beim Palettenwechsel entlang der Y-Achse lediglich die Schwenkbrücke verschoben werden muss, was relativ einfach und schnell umzusetzen ist.

In einer Alternative, die nicht Teil der Erfindung ist, kann vorgesehen sein, dass die Relativpositionierung der Schwenkbrücke, ausschließlich durch Verschieben der Palettenaufnahmefächer, entlang der vertikalen Y-Achse unterhalb des Niveau jenes Palettenaufnahmefaches, aus welchem die Palette eingewechselt werden soll, erfolgt und dass die Aufnahme der Palette am Rundtisch dadurch erfolgt, dass Palettenaufnahmefächer entlang der vertikalen Y-Achse nach oben verschoben werden, bis die Palette am Rundtisch aufgenommen ist. Hierdurch kann der Palettenwechsel auf relativ einfache Weise bewerkstelligt werden.

Darüber hinaus kann vorgesehen sein, dass zum Aufnehmen der Palette aus dem Horizontalausschubsystem die Schwenkbrücke entlang der vertikalen Y-Achse so weit nach oben bewegt wird, bis der Rundtisch an der Palette anliegt und dass die Palette anschließend mittels dem Rundtisch entlang der vertikalen Y-Achse nach oben aus der formschlüssigen Aufnahme der Palettenhalterung herausgehoben wird. Dies bringt den Vorteil mit sich, dass die Palette in der Palettenhalterung nicht gesondert verriegelt werden muss, sondern dass die Palette einfach aus der Palettenhalterung herausgehoben werden kann.

In einer Alternative, die nicht Teil der Erfindung ist, kann vorgesehen sein, dass zum Aufnehmen der Palette aus dem Horizontalausschubsystem die Palettenaufnahmefächer und die Schwenkbrücke relativ zueinander entlang der vertikalen Y-Achse so weit nach oben bzw. unten bewegt werden, bis der Rundtisch an der Palette anliegt und dass die Palette anschließend mittels dem Rundtisch entlang der vertikalen Y-Achse nach oben aus der formschlüssigen Aufnahme der Palettenhalterung herausgehoben wird. Durch diese Maßnahme kann erforderliche Verschiebung der Schwenkbrücke bzw. der Palettenaufnahmefächer gegenüber einer ausschließlichen Verschiebung der Schwenkbrücke entlang der Y-Achse verkürzt werden.

In einer Alternative, die nicht Teil der Erfindung ist, kann vorgesehen sein, dass zum Aufnehmen der Palette aus dem Horizontalausschubsystem lediglich die Palettenaufnahmefächer entlang der vertikalen Y-Achse so weit nach unten bewegt werden, bis der Rundtisch an der Palette anliegt und dass die Palette anschließend mittels dem Rundtisch entlang der vertikalen Y-Achse nach oben aus der formschlüssigen Aufnahme der Palettenhalterung herausgehoben wird. Diese Maßnahme ermöglicht, dass die Palette einfach aus der Palettenhalterung herausgeschoben werden kann. Vorteilhaft ist auch eine Ausprägung, gemäß welcher vorgesehen sein kann, dass anschließend an das Herausheben der Palette aus der Aufnahme der Palettenhalterung, die leere Palettenhalterung entlang der horizontalen Z-Achse in den Palettenspeicher verschoben wird.

Durch diese Maßnahme wird der Bearbeitungsraum freigegeben und die Bearbeitung des Werkstückes kann starten.

Gemäß einer Weiterbildung ist es möglich, dass zum Entfernen der am Rundtisch aufgenommenen Palette in einem ersten Verfahrensschritt die Schwenkbrücke entlang der vertikalen Y-Achse nach oben verschoben wird, bis die Palette in Bezug auf die Y-Achse oberhalb des Niveau jenes Palettenaufnahmefaches, in welchem die Palette aufgenommen werden soll, angeordnet ist, wobei in einem anschließenden Verfahrensschritt die dem Palettenaufnahmefach zugeordnete Palettenhalterung entlang einer horizontalen Z-Achse in einen Bearbeitungsraum der Werkzeugmaschine geschoben wird und anschließend die Schwenkbrücke entlang der vertikalen Y-Achse nach unten verschoben wird, bis die Palette an der Palettenhalterung aufgenommen ist. Durch diese Maßnahme kann eine neue Palette eingewechselt werden.

In einer Alternative, die nicht Teil der Erfindung ist, kann vorgesehen sein, dass zum Entfernen der am Rundtisch aufgenommenen Palette in einem ersten Verfahrensschritt die Palettenaufnahmefächer entlang der vertikalen Y-Achse nach unten verschoben werden, bis die Palette in Bezug auf die Y-Achse unterhalb des Niveau jenes Palettenaufnahmefaches, in welchem die Palette aufgenommen werden soll, angeordnet ist, wobei in einem anschließenden Verfahrensschritt die dem Palettenaufnahmefach zugeordnete Palettenhalterung entlang einer horizontalen Z-Achse in einen Bearbeitungsraum der Werkzeugmaschine geschoben wird und anschließend die Palettenaufnahmefächer entlang der vertikalen Y-Achse nach oben verschoben wird, bis die Palette an der Palettenhalterung aufgenommen ist. Durch diese Maßnahme kann eine neue Palette eingewechselt werden.

Auch eine Kombination der Verschiebung von Palettenfächern bzw. der Schwenkbrücke relativ zu einander kann in einer Alternative, die nicht Teil der Erfindung ist, vorgesehen sein. Dazu kann vorgesehen sein, dass zum Entfernen der am Rundtisch aufgenommenen Palette in einem ersten Verfahrensschritt die Schwenkbrücke entlang der vertikalen Y-Achse nach oben und die Palettenaufnahmefächer entlang der vertikalen Y-Achse nach unten verschoben werden bis die Palette in Bezug auf die Y-Ahse oberhalb des Niveau jenes Palettenaufnahmefaches, in welchem die Palette aufgenommen werden soll, angeordnet ist, wobei in einem anschließenden Verfahrensschritt die dem Palettenaufnahmefach zugeordnete Palettenhalterung entlang einer horizontalen Z-Achse in einen Bearbeitungsraum der Werkzeugmaschine geschoben wird und anschließend die Schwenkbrücke entlang der vertikalen Y-Achse nach unten verschoben wird bzw. die Palettenaufnahmefächer entlang der vertikalen Y-Achse nach oben verschoben werden, bis die Palette an der Palettenhalterung aufgenommen ist. Durch diese Maßnahme können die relativen Verschiebewege der Palettenaufnahmefächer bzw. der Schwenkbrücke relativ kurz gehalten werden.

Weiters kann vorgesehen sein, dass nach dem Wechseln der Palette, die Werkstücke, welche auf der im Bearbeitungsraum befindlichen Palette gespannt sind, mittels dem Bearbeitungswerkzeug bearbeitet werden und zeitgleich an der beim Wechselvorgang außerhalb des Bearbeitungsraumes gebrachten Palette die bearbeiteten Werkstücke entfernt werden und die Palette mit neuen Werkstücken bestückt wird. Dies bringt eine Verkürzung der Nebenzeiten mit sich, da das Rüsten der Paletten parallel zum Bearbeitungsvorgang erfolgen kann.

Außerdem kann vorgesehen sein, dass die außerhalb des Bearbeitungsraumes gebrachte Palette direkt im Palettenspeicher mit neuen Werkstücken bestückt wird. Somit muss die Palette nicht aus dem Palettenspeicher entfernt werden, um mit neuen Werkstücken bestückt zu werden.

Ferner kann es zweckmäßig sein, wenn die außerhalb des Bearbeitungsraumes gebrachte Palette mittels einem Manipulator mit neuen Werkstücken bestückt wird.

Von Vorteil ist außerdem, wenn der Manipulator eine erste Greifeinheit und eine zweite Greifeinheit aufweist, wobei die bereits bearbeiteten Werkstücke mittels der ersten Greifeinheit von der Palette entfernt werden und anschließend in der zweiten Greifeinheit aufgenommene neue Werkstücke auf der Palette abgelegt werden.

Die X-Achse, die Y-Achse und die Z-Achse sind virtuelle Achsen eines Koordinatensystems. Das Koordinatensystem kann hierbei unter Beibehaltung seiner Ausrichtung in jeden beliebigen Punkt der Werkzeugmaschine verschoben werden.

Die A-Achse definiert die Drehachse der Schwenkbrücke. Die B-Achse definiert die Drehachse des Rundtisches.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Ausführungsbeispiels einer Werkzeugmaschine;
- Fig. 2: einen Halbschnitt eines weiteren Ausführungsbeispiels einer Werkzeugmaschine mit einem Palettenspeicher, gemäß der Schnittlinie II-II aus Fig. 1;
- Fig. 3: eine schematische Detailansicht der Verbindung zwischen einer Palettenhalterung und einer Palette;
- Fig. 4 a bis c: verschiedene Verfahrensschritte eines Palettenwechselvorganges;
- Fig. 5: einen Halbschnitt eines weiteren Ausführungsbeispiels einer Werkzeugmaschine mit rückwärtig ausschiebbarer Palette;
- Fig. 6: einen Halbschnitt eines weiteren Ausführungsbeispiels einer Werkzeugmaschine mit automatischem Palettenzuliefersystem.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

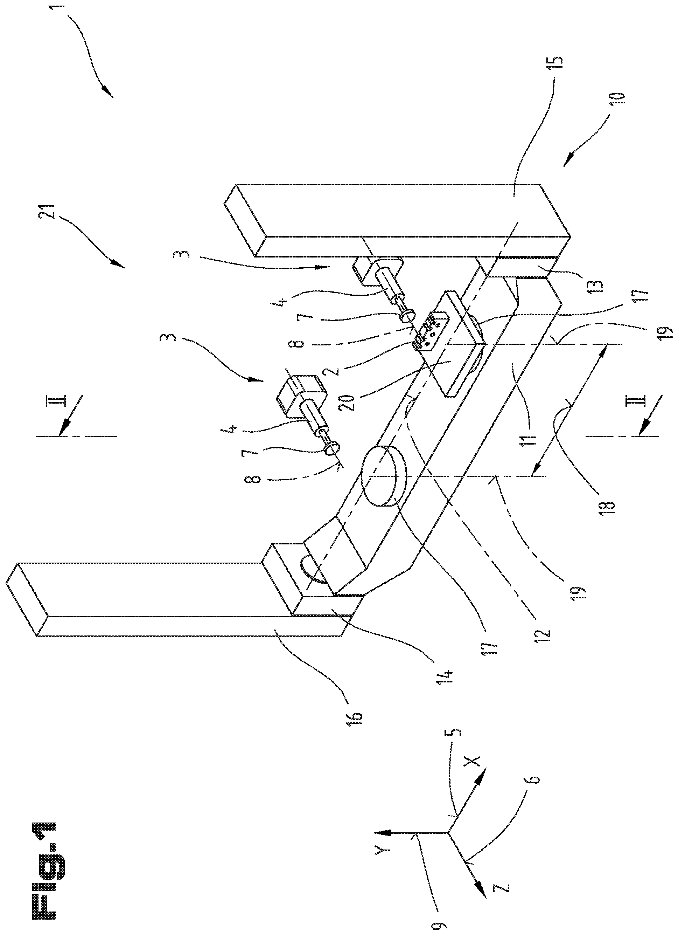

Fig. 1 zeigt in einer perspektivischen Ansicht eine schematische Darstellung einer Werkzeugmaschine 1 zur spanabhebenden Bearbeitung von Werkstücken 2.

Die Werkzeugmaschine 1 umfasst eine Spindelaufnahme 3 in welcher zumindest eine drehantreibbare Werkzeugspindel 4 aufgenommen ist. Wie im vorliegenden Ausführungsbeispiel nach Fig. 1 ersichtlich, kann auch vorgesehen sein, dass an der Werkzeugmaschine 1 zwei Werkzeugspindeln 4 ausgebildet sind, welche synchron zueinander bewegt werden können. Erfindungsgemäß ist es vorgesehen, dass die zumindest eine Werkzeugspindel 4 entlang einer X-Achse 5 bzw. entlang einer senkrecht darauf stehenden Z-Achse 6 bewegt werden kann. Die X-Achse 5 und die Z-Achse 6 liegen in einer horizontalen Ebene.

Eine Y-Achse 9 ist im rechten Winkel zur Z-Achse 6 und zur X-Achse 5 angeordnet und verläuft somit vertikal.

Zum Bearbeiten eines Werkstückes 2 wird in der Werkzeugspindel 4 ein Bearbeitungswerkzeug 7 gespannt. Mittels einem Drehantrieb der Werkzeugspindel 4 ist das Bearbeitungswerkzeug 7 bezüglich einer Spindelachse 8 drehantreibbar. Die Spindelachse 8 verläuft parallel zur Z-Achse 6.

Wie in Fig. 1 dargestellt, kann vorgesehen sein, dass die Werkzeugmaschine 1 zwei Werkzeugspindeln 4 aufweist, welche parallel zueinander angeordnet sind.

In einem weiteren, nicht dargestellten Ausführungsbeispiel kann auch vorgesehen sein, dass nur eine Werkzeugspindel 4 ausgebildet ist.

Weiters umfasst die Werkzeugmaschine 1 ein Maschinenbett 10 in welchem eine Schwenkbrücke 11 aufgenommen ist. Die Schwenkbrücke 11 ist mit einem ersten Führungsschlitten 13 und einem zweiten Führungsschlitten 14 gekoppelt. Insbesondere ist vorgesehen, dass die Schwenkbrücke 11 bezüglich einer A-Achse 12 schwenkbar an den Führungsschlitten 13, 14 aufgenommen ist. Der erste Führungsschlitten 13 ist an einer ersten Führungsschiene 15 aufgenommen und der zweite Führungsschlitten 14 ist an einer zweiten Führungsschiene 16 aufgenommen.

Die beiden Führungsschlitten 13, 14 sind jeweils entlang der Y-Achse 9 relativ zur Führungsschiene 15, 16 verschiebbar. Durch diese Ausbildung der Führungsschlitten 13, 14 ist auch die Schwenkbrücke 11 entlang der Y-Achse 9 und somit in vertikaler Richtung verschiebbar.

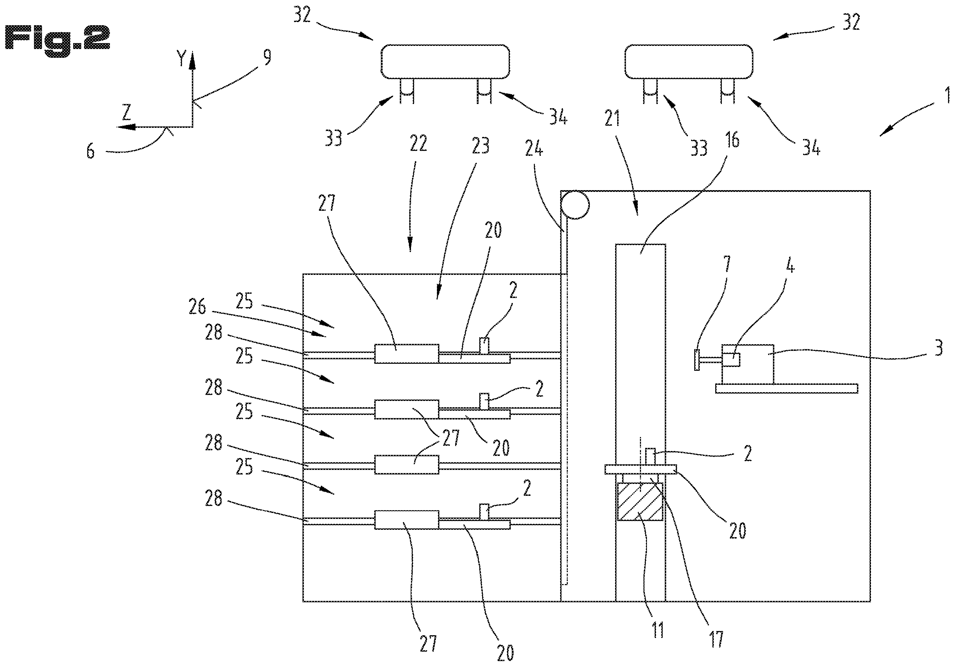

In einer Alternative, die nicht Teil der Erfindung ist, kann vorgesehen sein, dass die in Fig. 2 dargestellten Palettenaufnahmefächer 25 entlang der Y-Achse 9 innerhalb des Palettenspeichers 22 verschiebbar ausgebildet sind. Die die Palettenaufnahmefächer 25 können dabei mittels z.B. eines nicht dargestellten Elektro- oder Hydraulikantriebes entlang der vertikalen Y-Achse 9 höhenverstellbar sein.

Im vorliegenden Ausführungsbeispiel gemäß Fig. 1 sind an der Schwenkbrücke 11 zwei Rundtische 17 angeordnet. Die Rundtische 17 sind in einem Abstand 18 zueinander angeordnet. Der Abstand 18 der beiden Rundtische 17 zueinander, ist gleich groß wie ein Abstand der beiden Werkzeugspindeln 4 zueinander.

Weiters ist vorgesehen, dass die Rundtische 17 jeweils um eine B-Achse 19 drehbar an der Schwenkbrücke 11 angeordnet sind. Die Rundtische 17 können jeweils mittels einem Rundtischantrieb exakt in eine gewünschte Position gedreht werden.

Die Rundtische 17 dienen jeweils zur Aufnahme einer Palette 20.

Alternativ dazu kann auch vorgesehen sein, dass die Palette 20 oder die Paletten 20 direkt an der Schwenkbrücke 11 aufgenommen werden.

Der Übersichtlichkeit halber ist in der Ansicht nach Fig. 1 nur an einem der beiden Rundtische eine Palette 20 dargestellt.

An der Palette 20 sind jeweils eines oder mehrere der Werkstücke 2 aufgenommen. Insbesondere ist vorgesehen, dass der Rundtisch 17 ein Befestigungssystem aufweist, mittels welchem die Palette 20 fixiert werden kann. Eine Oberseite des Rundtisches 17 und eine Unterseite der Palette 20 können aneinander angepasst sein, sodass die Palette 20 am Rundtisch 17 aufgenommen sein kann. Der Rundtisch 17 bzw. die Palette 20 können jede beliebige Form aufweisen. Der Rundtisch 17 kann neben der dargestellten runden Formgebung beispielsweise auch eine polygone Form aufweisen. Natürlich kann auch die Palette 20 jede beliebige Formgebung aufweisen.

Wie aus Fig. 1 weiters ersichtlich, kann vorgesehen sein, dass die Schwenkbrücke 11 eine gekröpfte Form aufweist, sodass die Oberfläche der Palette 20 an welcher die Werkstücke 2 aufgenommen sind, im Nahbereich der A-Achse 12 liegt.

An der Werkzeugmaschine 1 ist ein Bearbeitungsraum 21 ausgebildet, in welchem das Bearbeitungswerkzeug 7 mit dem Werkstück 2 in Kontakt gebracht werden kann. Als Bearbeitungsraum 21 wird insbesondere jener Raum definiert, in welchem das Werkstück 2 mittels der Schwenkbrücke 11 bewegt werden kann und das Werkstück 2 mittels dem Bearbeitungswerkzeug 7 bearbeitet werden kann.

Beim Bearbeiten des Werkstückes 2 wird dieses mittels der Schwenkbrücke 11 in Y-Richtung verschoben. Weiters wird die Schwenkbrücke 11 um die A-Achse 12 gedreht, sodass die Winkellage des Werkstücks 2 verändert werden kann. Darüber hinaus kann der Rundtisch 17 um die B-Achse 19 verdreht werden, sodass das Werkstück 2 von allen Seiten zugänglich ist. Außerdem kann die Werkzeugspindel 4 in Richtung der Z-Achse und in Richtung der Y-Achse verschoben werden. Die genannten Bewegungen können entweder einzeln und unabhängig voneinander oder zeitgleich und aufeinander abgestimmt durchgeführt werden.

Fig. 2 zeigt ein weiteres Ausführungsbeispiel einer Werkzeugmaschine 1, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In Fig. 2 wurde eine Schnittdarstellung gemäß der Schnittlinie II - II aus Fig. 1 gewählt. Im Ausführungsbeispiel der Werkzeugmaschine 1, welche in Fig. 2 dargestellt ist, ist zusätzlich zu den bereits beschriebenen Bauteilen ein Palettenspeicher 22 vorgesehen, welcher zur Aufnahme von mehreren Paletten 20 dient. Der Palettenspeicher 22 weist einen Palettenaufnahmeraum 23 auf, in welchem die einzelnen Paletten 20 zwischengespeichert werden können.

Wie aus Fig. 2 ersichtlich, kann vorgesehen sein, dass der Palettenaufnahmeraum 23 und der Bearbeitungsraum 21 mittels einem Trennelement 24 voneinander getrennt sind, wobei das Trennelement 24 bedarfsweise öffenbar bzw. schließbar ist. Das Trennelement 24 ist strichliert in seiner geschlossenen Stellung dargestellt.

Im Palettenaufnahmeraum 23 sind mehrere Palettenaufnahmefächer 25 angeordnet, welche jeweils zur Aufnahme einer Palette 20 dienen. Wie aus Fig. 2 ersichtlich, kann beispielsweise vorgesehen sein, dass vier Palettenaufnahmefächer 25 übereinander angeordnet sind. Die Palettenaufnahmefächer 25 sind hierbei in Richtung der Y-Achse 9 zueinander beabstandet. In einer Alternative, die nicht Teil der Erfindung ist, können die Palettenaufnahmefächer 25 wie oben erwähnt entlang der vertikalen Y-Achse 9 höhenverstellbar ausgebildet sein.

Wie aus Fig. 2 ersichtlich, kann vorgesehen sein, dass jedes der Palettenaufnahmefächer 25 ein Horizontalausschubsystem 26 aufweist, mittels welchem die Paletten 20 aus dem Palettenaufnahmeraum 23 in den Bearbeitungsraum 21 verschoben werden können. Die Paletten 20 werden hierbei in Richtung der Z-Achse 6 verschoben.

In Fig. 2 ist auch ein Manipulator 32 dargestellt, welcher zum Palettenwechsel bzw. Werkstückwechsel vorgesehen ist. Der Manipulator 32 ist nur schematisch dargestellt. Dieser kann beispielsweise an einem Kran oder an einem Roboter angeordnet sein. Wie aus Fig. 2 ersichtlich, kann vorgesehen sein, dass der Manipulator 32 eine erste Greifeinheit 33 und eine zweite Greifeinheit 34 aufweist. Der Manipulator 32 kann um eine Vertikale Achse drehbar ausgebildet sein, sodass durch eine Drehbewegung des Manipulators 32 die erste Greifeinheit 33 oder die zweite Greifeinheit 34 über der Palette 20 positioniert werden können.

Wie aus Fig. 2 ersichtlich, kann vorgesehen sein, das der Manipulator 32 frei im Bereich der Werkzeugmaschine 1 bewegt werden kann. Somit kann der Manipulator 32 beispielsweise in den Palettenspeicher 22 eingreifen. Weiters kann auch vorgesehen sein, dass der Manipulator 32 bzw. dessen eine erste Greifeinheit 33 und eine zweite Greifeinheit 34 um zumindest eine horizontale Achse schwenkbar ausgebildet sind.

Weiters kann vorgesehen sein, dass das Horizontalausschubsystem 26 jeweils eine Palettenhalterung 27 aufweist, welche zur Aufnahme der Palette 20 dient und welche jeweils an einer Ausschubschiene 28 gelagert ist, sodass die Palettenhalterung 27 in Richtung der Z-Achse 6 verschiebbar ist.

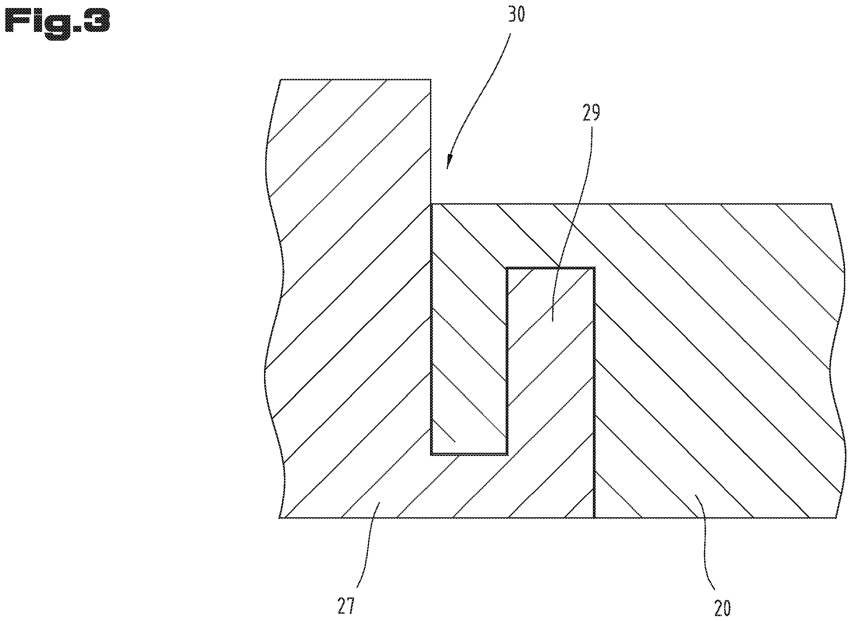

Insbesondere ist vorgesehen, dass die Palette 20 lösbar mit der Palettenhalterung 27 gekoppelt ist. Zur lösbaren Verbindung zwischen der Palettenhalterung 27 und der Palette 20 sind verschiedenste Ausführungsvarianten denkbar. Beispielsweise kann vorgesehen sein, dass die Palette 20 formschlüssig mit der Palettenhalterung 27 gekoppelt ist und beispielsweise durch Ausnutzung der Schwerkraft in der Palettenhalterung 27 gehalten wird. Ein derartiges Ausführungsbeispiel ist schematisch in Fig. 3 dargestellt.

In wieder einer anderen Ausführungsvariante ist es auch denkbar, dass eine aktiv schaltbare Kupplung vorgesehen ist, mittels welcher die Palette 20 an die Palettenhalterung 27 gekoppelt werden kann.

Fig. 3 zeigt in einer Detailansicht die mögliche formschlüssige Verbindung zwischen der Palettenhalterung 27 und der Palette 20. Wie aus Fig. 3 ersichtlich, kann vorgesehen sein, dass die Palettenhalterung 27 eine Haltenase 29 aufweist, welche mit einer entsprechenden Ausnehmung in der Palette 20 korrespondiert und die Palette 20 somit formschlüssig mit der Palettenhalterung 27 gekoppelt sein kann. Die Palette 20 braucht hierbei nur in einem Randbereich 30 mit der Palettenhalterung 27 gekoppelt zu werden. Der restliche Teil der Palette 20 kann frei auskragend durch die dargestellte, formschlüssige Verbindung gehalten werden.

Wie aus Fig. 3 ersichtlich, ist die Haltenase 29 so gewählt, dass die Palette 20 durch Ausnutzung der Schwerkraft an der Palettenhalterung 27 gehalten werden kann.

Die Haltenase 29 kann sich beispielsweise über die komplette Breite der Palettenhalterung 27 erstrecken. Alternativ dazu ist es auch denkbar, dass die Haltenase 29 nur in einem Teilbereich der Breite der Palettenhalterung 27 ausgebildet ist. Beispielsweise ist es denkbar, dass die Haltenase 29 in Form eines oder mehrerer Führungsstifte ausgebildet ist, welche mit entsprechenden Ausnehmungen in der Palette 20 zusammenwirkt.

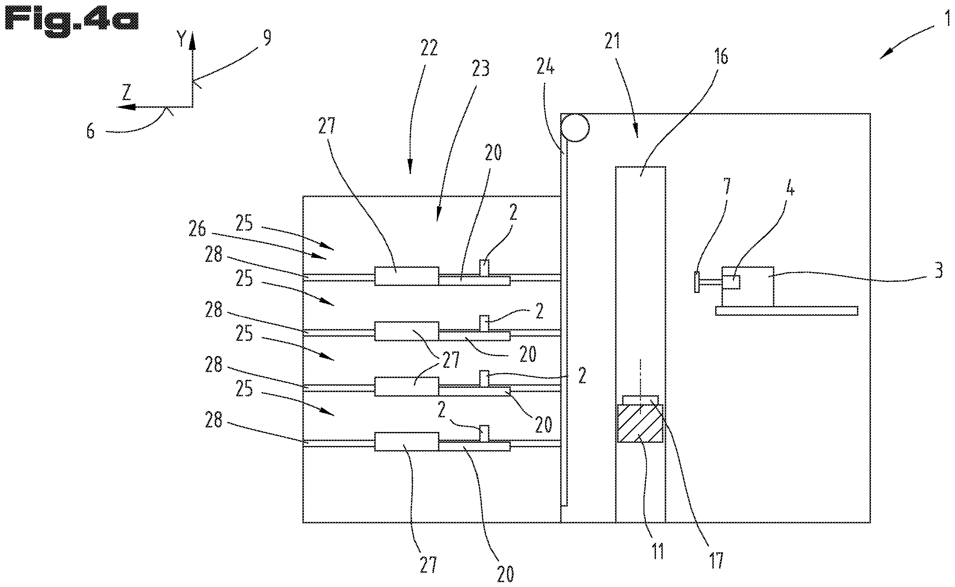

Ein möglicher Palettenwechselvorgang wird anhand der Figuren 4a bis 4c beschrieben.

In Fig. 4a ist der erste Verfahrensschritt eines Palettenwechselvorganges dargestellt. Jene Palettenhalterung 27 an der die in den Bearbeitungsraum 21 der Werkzeugmaschine 1 einzuwechselnde Palette 20 angeordnet ist, befindet sich in der Darstellung nach Fig. 4a im Palettenaufnahmeraum 23.

Die Schwenkbrücke 11 wird im ersten Verfahrensschritt entlang der Y-Achse 9 so weit nach unten verschoben, bis sich die Oberseite des Rundtisches 17 unterhalb des Niveaus der Unterseite der aufzunehmenden Palette 20 befindet. Zeitgleich bzw. auch diesem Prozess vorgelagert oder nachgelagert, kann das Trennelement 24 geöffnet werden.

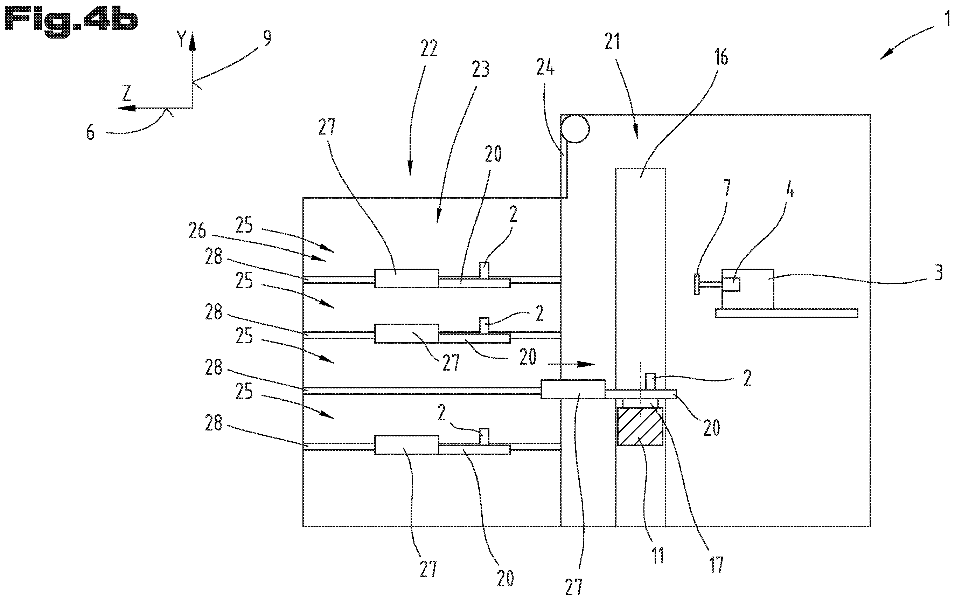

In einem nachfolgenden Prozessschritt entsprechend der Fig. 4b kann die Palettenhalterung 27 mitsamt der darauf aufgenommenen Palette 20 aus dem Palettenaufnahmeraum 23 in den Bearbeitungsraum 21 verschoben werden. Die Palette 20 wird hierbei so weit in den Bearbeitungsraum 21 verschoben, bis die Palette 20 in einer Aufnahmeposition entsprechend Fig. 4b oberhalb des Rundtisches 17 angeordnet ist. In einem anschließenden Verfahrensschritt kann die Schwenkbrücke 11 mitsamt dem Rundtisch 17 entlang der vertikalen Y-Achse 9 nach oben bewegt werden, bis die Palette 20 am Rundtisch 17 aufliegt. Anschließend kann die Palette 20 mit dem Rundtisch 17 gekoppelt werden, wobei mittels einer Koppelvorrichtung eine feste Verbindung zwischen der Palette 20 und dem Rundtisch 17 hergestellt werden kann.

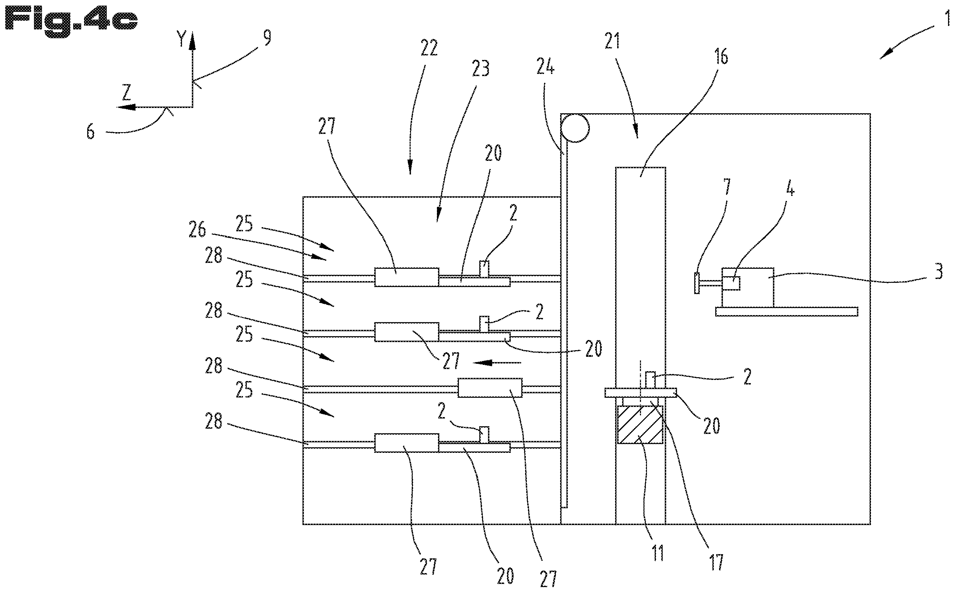

In einem weiteren Verfahrensschritt entsprechend der Fig. 4c kann die Schwenkbrücke 11 weiter angehoben werden, sodass die Palette 20 aus der Aufnahme der Palettenhalterung 27 herausgehoben werden kann.

Anschließend kann die Palettenhalterung 27 wieder entlang der Z-Achse 6 horizontal in den Palettenaufnahmeraum 23 hineinverschoben werden und das Trennelement 24 geschlossen werden. Anschließend kann der Bearbeitungsvorgang zum Bearbeiten des Werkstücks 2 gestartet werden. Nach dem Beenden des Bearbeitungsvorganges kann in umgekehrter Reihenfolge die Palette 20 mit dem fertig bearbeiteten Werkstück 2 wieder vom Bearbeitungsraum 21 in den Palettenaufnahmeraum 23 bewegt werden.

In einem ersten Verfahrensschritt kann hierbei das Trennelement 24 geöffnet werden und die Schwenkbrücke 11 nach oben verschoben werden, sodass die vom Rundtisch 17 zu entfernende Palette 20 oberhalb der leeren Palettenhalterung 27 positioniert ist. Anschließend kann die leere Palettenhalterung 27 in den Bearbeitungsraum 21 verschoben werden.

In einem anschließenden Verfahrensschritt kann der Rundtisch 17 mitsamt der darauf aufgenommenen Palette 20 vertikal nach unten verschoben werden, sodass die Palettenhalterung 27 in die Palette 20 eingreift. Wenn die Aufnahmeposition erreicht ist, kann die Verbindung zwischen dem Rundtisch 17 und der Palette 20 gelöst werden, sodass die Palette 20 an der Palettenhalterung 27 gehalten werden kann. Anschließend kann der Rundtisch 17 weiter nach unten bewegt werden, bis die Palette 20 nicht mehr am Rundtisch 17 aufliegt, sondern ausschließlich von der Palettenhalterung 27 gehalten wird. Wenn nun der Rundtisch 17 ausreichend von der Palette 20 beabstandet ist, kann die Palettenhalterung 27 mitsamt der Palette 20 horizontal in den Palettenaufnahmeraum 23 verschoben werden.

Anschließend kann entsprechend den bereits beschriebenen Verfahrensschritten eine weitere Palette 20 mit unbearbeiteten Werkstücken 2, welche in einem weiteren der Palettenaufnahmefächer 25 angeordnet ist, eingewechselt werden.

Das Herausbewegen der Palette 20 mit den bereits bearbeiteten Werkstücken 2 vom Bearbeitungsraum 21 in den Palettenaufnahmeraum 23 und das Hineinbewegen einer Palette 20 mit noch zu bearbeitenden Werkstücken 2 vom Palettenaufnahmeraum 23 in den Bearbeitungsraum 21 kann zeitlich überlappend erfolgen, da die Paletten 20 in unterschiedlichen Palettenaufnahmefächern 25 angeordnet sind. Hierfür kann es notwendig sein, dass jede der Palettenhalterungen 27 über einen eigenen Antrieb verfügt, mittels welchem sie unabhängig von den weiteren Palettenhalterungen 27 entlang der Z-Achse 6 verschoben werden kann.

In einer Alternative, die nicht Teil der Erfindung ist, analog zu der Beschreibung der Fig 4a bis 4c ist eine Relativpositionierung der Schwenkbrücke 11 und der Palettenaufnahmefächer 25 zueinander derart denkbar, dass die Schwenkbrücke 11 soweit in Richtung der vertikalen Y-Achse 9 nach unten geschoben wird bzw. die Palettenaufnahmefächer soweit nach oben geschoben werden um die Schwenkbrücke 11 unterhalb jenes Palettenaufnahmefaches 25 anzuordnen, aus welchem die Palette 20 eingewechselt werden soll.

Der zweite Verfahrensschritt des Einwechselns der Palette 20 erfolgt wie oben beschrieben, wobei wiederum eine Relativbewegung der Schwenkbrücke 11 und der Palettenaufnahmefächer 25 zueinander erfolgt.

Ebenso analog zur obigen Beschreibung der Fig. 4c kann das Herausheben der Palette 20 aus der Palettenhalterung 27 erfolgen, wobei wiederum eine Relativbewegung der Schwenkbrücke 11 und der Palettenaufnahmefächer 25 zueinander erfolgen kann.

In einer Alternative zur Beschreibung der Fig 4a bis 4c, die nicht Teil der Erfindung ist, ist es auch denkbar dass die Relativpositionierung der Schwenkbrücke 11 und der Palettenaufnahmefächer 25 zueinander derart erfolgt, dass die Schwenkbrücke 11 nicht in Richtung der vertikalen Y-Achse 9 nach unten geschoben wird sondern lediglich die Palettenaufnahmefächer 25 soweit nach oben geschoben werden um die Schwenkbrücke 11 unterhalb jenes Palettenaufnahmefaches 25 anzuordnen, aus welchem die Palette 20 eingewechselt werden soll. Die weiteren Verfahrensschritte sind mutatis mutandis für Fig. 4b und c bereits beschrieben und werden hier deshalb nicht wiederholt, da der Fachmann die oben beschriebenen Verfahrensschritte auf die ausschließliche Verschiebungen der Palettenaufnahmefächer 25 übertragen kann.

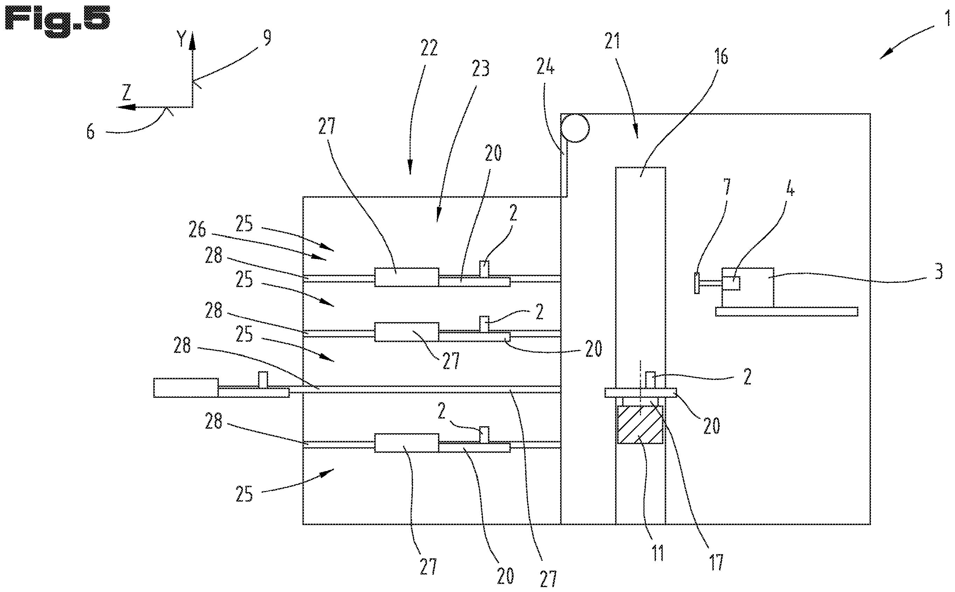

Fig. 5 zeigt ein weiteres Ausführungsbeispiel der Werkzeugmaschine 1, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass die Palette 20 an der zum Bearbeitungsraum 21 gegenüberliegenden Seite aus dem Palettenaufnahmeraum 23 hinausverschoben werden kann, sodass die Palette 20 beispielsweise mit neuen Werkstücken bestückt werden kann.

Weiters kann auch vorgesehen sein, dass in einer Stellung der Palettenhalterung 27, wie sie in Fig. 5 dargestellt ist, die komplette Palette 20 ausgewechselt und gegen eine neue Palette 20 ersetzt werden kann. Dies kann beispielsweise mittels einem Kran erfolgen.

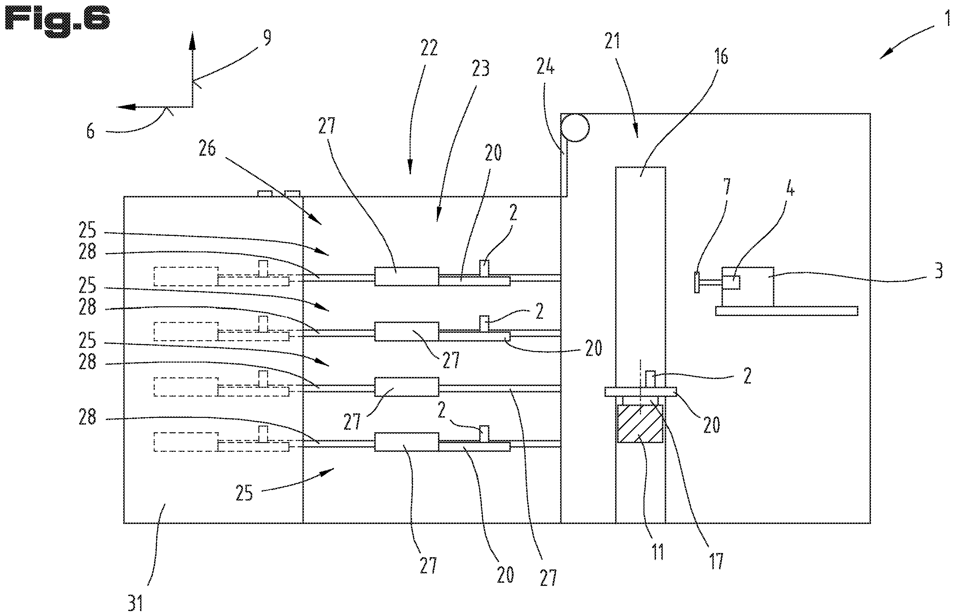

Fig. 6 zeigt ein weiteres Ausführungsbeispiel der Werkzeugmaschine 1 wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass der Palettenspeicher 22 an ein Palettenzuliefersystem 31 gekoppelt ist, mittels welchem automatisiert Paletten 20 in den Palettenaufnahmeraum 23 geladen bzw. von diesem entfernt werden können.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkzeugmaschine | 31 | Palettenzuliefersystem |
| 2 | Werkstück | 32 | Manipulator |
| 3 | Spindelaufnahme | 33 | erste Greifeinheit |
| 4 | Werkzeugspindel | 34 | zweite Greifeinheit |
| 5 | X-Achse | | |
| 6 | Z-Achse | | |
| 7 | Bearbeitungswerkzeug | | |
| 8 | Spindelachse | | |
| 9 | Y-Achse | | |
| 10 | Maschinenbett | | |
| 11 | Schwenkbrücke | | |
| 12 | A-Achse | | |
| 13 | erster Führungsschlitten | | |
| 14 | zweiter Führungsschlitten | | |
| 15 | erste Führungsschiene | | |
| 16 | zweite Führungsschiene | | |
| 17 | Rundtisch | | |
| 18 | Abstand | | |
| 19 | B-Achse | | |
| 20 | Palette | | |
| 21 | Bearbeitungsraum | | |
| 22 | Palettenspeicher | | |
| 23 | Palettenaufnahmeraum | | |
| 24 | Trennelement | | |
| 25 | Palettenaufnahmefach | | |
| 26 | Horizontalausschubsystem | | |
| 27 | Palettenhalterung | | |
| 28 | Ausschubschienen | | |
| 29 | Haltenase | | |
| 30 | Randbereich | | |

## Patentansprüche

1. Werkzeugmaschine (1) zur spanabhebenden Bearbeitung von Werkstücken (2), umfassend:
- eine Spindelaufnahme (3) mit zumindest einer bezüglich einer Spindelachse (8) drehantreibbaren Werkzeugspindel (4), wobei die Werkzeugspindel (4) zumindest entlang einer horizontalen X-Achse (5) und entlang einer senkrecht auf die X-Achse (5) stehenden horizontalen Z-Achse (6), verschiebbar ist, wobei die Spindelachse (8) parallel zur Z-Achse (6) verläuft;
- ein Maschinenbett (10) mit einer Schwenkbrücke (11), welche um eine zur X-Achse (5) parallele A-Achse (12) schwenkantreibbar gelagert ist, wobei die Schwenkbrücke (11) zur Aufnahme einer Palette (20) für zumindest eines der zu bearbeitenden Werkstücke (2) ausgebildet ist;
- einen Bearbeitungsraum (21), welcher im Bereich der Schwenkbrücke (11) ausgebildet ist und welcher durch ein in der Spindelaufnahme (3) aufgenommenes Bearbeitungswerkzeug (7) zugänglich ist;
**dadurch gekennzeichnet, dass**
ein Palettenspeicher (22) ausgebildet ist, welcher in der Z-Achse (6) zur Schwenkbrücke (11) beabstandet angeordnet ist, wobei im Palettenspeicher (22) mehrere in einer Y-Achse (9) übereinander angeordnete Palettenaufnahmefächer (25) ausgebildet sind, welche zur Aufnahme von Paletten (20) dienen, wobei zumindest eines der Palettenaufnahmefächer (25) ein Horizontalausschubsystem (26) aufweist, mittels dem eine im zugeordneten Palettenaufnahmefach (25) aufgenommene Palette (20) entlang der Z-Achse (6) in den Bearbeitungsraum (21) hinein verschiebbar ist, wodurch die Palette (20) zur Übergabe an die Schwenkbrücke (11) bereitstellbar ist,
wobei die Schwenkbrücke (11) entlang der vertikalen Y-Achse (9) relativ zu den Palettenaufnahmefächern (25) verschiebbar ausgebildet ist und die Palettenaufnahmefächer (25) nicht entlang der vertikalen Y-Achse (9) verschiebbar ist.

2. Werkzeugmaschine nach Anspruch 1 **dadurch gekennzeichnet, dass** jedes der Palettenaufnahmefächer (25) ein Horizontalausschubsystem (26) aufweist.

3. Werkzeugmaschine nach einem der vorhergehenden Ansprüche, **dadurch gekennzeichnet, dass** das Horizontalausschubsystem (26) mit einem Elektromotor, insbesondere einem Servomotor, antriebsgekoppelt ist.

4. Werkzeugmaschine nach einem der vorhergehenden Ansprüche, **dadurch gekennzeichnet, dass** das Horizontalausschubsystem (26) eine Palettenhalterung (27) aufweist, die zur formschlüssigen Aufnahme der Palette (20) ausgebildet ist.

5. Werkzeugmaschine nach Anspruch 4, **dadurch gekennzeichnet, dass** an einer Stirnseite der Palettenhalterung (27) eine Haltenase (29) ausgebildet ist, in welche die Palette (20) einhängbar ist.

6. Werkzeugmaschine nach Anspruch 4 oder 5, **dadurch gekennzeichnet, dass** die Palettenhalterung (27) mit Ausschubschienen (28) gekoppelt ist, welche, insbesondere an einer Seitenwand, im Palettenspeicher (22) befestigt sind.

7. Werkzeugmaschine nach einem der vorhergehenden Ansprüche, **dadurch gekennzeichnet, dass** der Palettenspeicher (22) an ein Palettenzuliefersystem (31) gekoppelt ist, mittels welchem die einzelnen Palettenaufnahmefächer (25) mit Paletten (20) bestückbar sind.

8. Werkzeugmaschine nach einem der vorhergehenden Ansprüche, **dadurch gekennzeichnet, dass** die Paletten (20) mittels dem Horizontalausschubsystem (26) entlang der Z-Achse (6) an der zum Bearbeitungsraum (21) gegenüberliegenden Seite oder entlang der X-Achse (5) seitlich aus dem Palettenspeicher (22) ausgeschoben werden können.

9. Verfahren zum Wechseln einer Palette (20) an einer Werkzeugmaschine (1) nach einem der vorhergehenden Ansprüche, **dadurch gekennzeichnet, dass** das Verfahren folgende Verfahrensschritte umfasst:
- Bereitstellen einer mit Werkstücken (2) bestückten Palette (20) in einem Palettenaufnahmefach (25) eines Palettenspeichers (22);
- Relativpositionierung einer Schwenkbrücke (11) zur Aufnahme der Palette (20), in Richtung einer vertikalen Y-Achse (9) unterhalb des Niveau jenes Palettenaufnahmefaches (25), aus welchem die Palette (20) eingewechselt werden soll;
- Verschieben der Palette (20) entlang einer horizontalen Z-Achse (6) in einen Bearbeitungsraum (21) der Werkzeugmaschine (1) mittels einem Horizontalausschubsystem (26) des Palettenspeichers (22);
- Aufnahme der Palette (20) an der Schwenkbrücke (11) durch Relativverschiebung der Schwenkbrücke (11) zu jenem Palettenaufnahmefach (25), aus welchem die Palette (20) eingewechselt werden soll, bis die Palette an der Schwenkbrücke (11) aufliegt, wobei die Relativpositionierung der Schwenkbrücke (11), ausschließlich durch Verschieben der Schwenkbrücke (11) entlang der vertikalen Y-Achse (9) unterhalb des Niveau jenes Palettenaufnahmefaches (25), aus welchem die Palette (20) eingewechselt werden soll, erfolgt und dass die Aufnahme der Palette (20) an der Schwenkbrücke (11) dadurch erfolgt, dass die Schwenkbrücke (11) entlang der vertikalen Y-Achse (9) nach oben verschoben wird, bis die Palette (20) an der Schwenkbrücke (11) aufgenommen ist;
- Verriegeln der Palette (20) an der Schwenkbrücke (11).

10. Verfahren nach Anspruch 9, **dadurch gekennzeichnet, dass** zum Aufnehmen der Palette (20) aus dem Horizontalausschubsystem (26) die Schwenkbrücke (11) entlang der vertikalen Y-Achse (9) so weit nach oben bewegt wird, bis die an der Schwenkbrücke (11) an der Palette (20) anliegt und dass die Palette (20) anschließend mittels der an der Schwenkbrücke (11) entlang der vertikalen Y-Achse (9) nach oben aus der formschlüssigen Aufnahme der Palettenhalterung (27) herausgehoben wird.

11. Verfahren nach einem der Ansprüche 9 bis 10, **dadurch gekennzeichnet, dass** anschließend an das Herausheben der Palette (20) aus der Aufnahme der Palettenhalterung (27), die leere Palettenhalterung (27) entlang der horizontalen Z-Achse (6) in den Palettenspeicher (22) verschoben wird.

12. Verfahren nach einem der Ansprüche 9 bis 11, **dadurch gekennzeichnet, dass** zum Entfernen der an der Schwenkbrücke (11) aufgenommenen Palette (20) in einem ersten Verfahrensschritt die Schwenkbrücke (11) entlang der vertikalen Y-Achse (9) nach oben verschoben wird, bis die Palette (20) in Bezug auf die Y-Achse (9) oberhalb des Niveau jenes Palettenaufnahmefaches (25), in welchem die Palette (20) aufgenommen werden soll, angeordnet ist, wobei in einem anschließenden Verfahrensschritt die dem Palettenaufnahmefach (25) zugeordnete Palettenhalterung (27) entlang einer horizontalen Z-Achse (6) in einen Bearbeitungsraum (21) der Werkzeugmaschine (1) geschoben wird und anschließend die Schwenkbrücke (11) entlang der vertikalen Y-Achse (9) nach unten verschoben wird, bis die Palette (20) an der Palettenhalterung (27) aufgenommen ist.

13. Verfahren nach einem der Ansprüche 10 bis 12, **dadurch gekennzeichnet, dass** nach dem Wechseln der Palette (20), die Werkstücke (2), welche auf der im Bearbeitungsraum (21) befindlichen Palette (20) gespannt sind, mittels dem Bearbeitungswerkzeug (7) bearbeitet werden und zeitgleich an der beim Wechselvorgang außerhalb des Bearbeitungsraumes (21) gebrachten Palette (20) die bearbeiteten Werkstücke (2) entfernt werden und die Palette (20) mit neuen Werkstücken (2) bestückt wird.

14. Verfahren nach Anspruch 13, **dadurch gekennzeichnet, dass** die außerhalb des Bearbeitungsraumes (21) gebrachte Palette (20) mittels einem Manipulator (32) mit neuen Werkstücken (2) bestückt wird, wobei der Manipulator (32) eine erste Greifeinheit (33) und eine zweite Greifeinheit (34) aufweist, wobei die bereits bearbeiteten Werkstücke (2) mittels der ersten Greifeinheit (33) von der Palette (20) entfernt werden und anschließend in der zweiten Greifeinheit (34) aufgenommene neue Werkstücke (2) auf der Palette (20) abgelegt werden.

## Claims

1. A machine tool (1) for machining workpieces (2), comprising:
- a spindle receptacle (3) with at least one tool spindle (4) which can be rotatably driven with respect to a spindle axis (8), wherein the tool spindle (4) is displaceable at least along a horizontal X-axis (5) and along a horizontal Z-axis (6) perpendicular to the X-axis (5), wherein the spindle axis (8) runs parallel to the Z-axis (6);
- a machine bed (10) with a swivel bridge (11), which is mounted such that it can be pivotably driven about an A-axis (12) parallel to the X-axis (5), wherein the swivel bridge (11) is designed to receive a pallet (20) for at least one of the workpieces (2) to be machined;
- a processing space (21), which is formed in the region of the swivel bridge (11) and which is accessible by a processing tool (7) accommodated in the spindle receptacle (3);
**characterized in that**
a pallet store (22) is formed, which is arranged in the Z-axis (6) at a distance from the swivel bridge (11), wherein a plurality of pallet receiving compartments (25), which are arranged one above the other in a Y-axis (9) and which serve to receive pallets (20), are formed in the pallet store (22), wherein at least one of the pallet receiving compartments (25) has a horizontal extension system (26), by means of which a pallet (20) received in the associated pallet receiving compartment (25) can be displaced along the Z-axis (6) into the processing space (21), whereby the pallet (20) can be provided for transfer to the swivel bridge (11),
wherein the swivel bridge (11) is designed to be displaceable along the vertical Y-axis (9) relative to the pallet receiving compartments (25) and the pallet receiving compartments (25) are not displaceable along the vertical Y-axis (9).

2. The machine tool according to claim 1, **characterized in that** each one of the pallet receiving compartments (25) comprises a horizontal extension system (26).

3. The machine tool according to one of the preceding claims, **characterized in that** the horizontal extension system (26) is drive-coupled to an electric motor, in particular a servomotor.

4. The machine tool according to one of the preceding claims, **characterized in that** the horizontal extension system (26) comprises a pallet holder (27) which is formed for receiving the pallet (20) in a positive-locking manner.

5. The machine tool according to claim 4, **characterized in that** a retaining lug (29), into which the pallet (20) can be suspended, is formed on an end face of the pallet holder (27).

6. The machine tool according to claim 4 or 5, **characterized in that** the pallet holder (27) is coupled to extension rails (28), which are mounted in the pallet store (22), in particular, on a side wall.

7. The machine tool according to one of the preceding claims, **characterized in that** the pallet store (22) is coupled to a pallet delivery system (31) by means of which the individual pallet receiving compartments (25) can be loaded with pallets (20).

8. The machine tool according to one of the preceding claims, **characterized in that** the pallets (20) can be laterally pushed out of the pallet store (22) by means of the horizontal extension system (26) along the Z-axis (6) on the side opposite to the processing space (21) or along the X-axis (5).

9. A method for changing a pallet (20) on a machine tool (1) according to one of the preceding claims, **characterized in that** the method comprises the following method steps:
- providing a pallet (20) loaded with workpieces (2) in a pallet receiving compartment (25) of a pallet store (22);
- relatively positioning a swivel bridge (11) for receiving the pallet (20) in the direction of a vertical Y-axis (9) below the level of the pallet receiving compartment (25) from which the pallet (20) is to be loaded;
- displacing the pallet (20) along a horizontal Z-axis (6) in a processing space (21) of the machine tool (1) by means of a horizontal extension system (26) of the pallet store (22);
- receiving the pallet (20) at the swivel bridge (11) by relatively displacing the swivel bridge (11) to the pallet receiving compartment (25) from which the pallet (20) is to be loaded until the pallet rests on the swivel bridge (11), wherein the relative positioning of the swivel bridge (11) is carried out merely by displacing the swivel bridge (11) along the vertical Y-axis (9) below the level of the pallet receiving compartment (25) from which the pallet (20) is to be loaded, and that receiving the pallet (20) at the swivel bridge (11) is carried out **in that** the swivel bridge (11) is displace upwards along the vertical Y-axis (9) until the pallet (20) is received at the swivel bridge (11);
- locking the pallet (20) at the swivel bridge (11).

10. The method according to claim 9, **characterized in that** to receive the pallet (20) from the horizontal extension system (26), the swivel bridge (11) is moved upwards along the vertical Y-axis (9) until the swivel bridge (11) contacts the pallet (20) and that the pallet (20) is subsequently lifted upwards along the vertical Y-axis (9) out of the positively-locked reception of the pallet holder (27) by means of the swivel bridge (11).

11. The method according to one of claims 9 to 10, **characterized in that** subsequently to lifting of the pallet (20) out of the reception of the pallet holder (27), the empty pallet holder (27) is displaced along the horizontal Z-axis (6) into the pallet store (22).

12. The method according to one of claims 9 to 11, **characterized in that** to remove the pallet (20) received on the swivel bridge (11), in a first method step the swivel bridge (11) is displaced upwards along the vertical Y-axis (9) until the pallet (20) is arranged, with respect to the Y-axis (9), above the level of the pallet receiving compartment (25) in which the pallet (20) is to be received, wherein, in a subsequent method step, the pallet holder (27) associated with the pallet receiving compartment (25) is pushed along a horizontal Z-axis (6) into a processing space (21) of the machine tool (1) and subsequently the swivel bridge (11) is displaced downwards along the vertical Y-axis (9) until the pallet (20) is received at the pallet holder (27).

13. The method according to one of claims 10 to 12, **characterized in that**, after the pallet (20) has been changed, the workpieces (2) clamped on the pallet (20) located in the processing space (21) are processed by means of the processing tool (7) and, at the same time, on the pallet (20) brought outside the processing space (21) during the changing operation, the processed workpieces (2) are removed and the pallet (20) is loaded with new workpieces (2).

14. The method according to claim 13, **characterized in that** the pallet (20) brought outside the processing space (21) is loaded with new workpieces (2) by means of a manipulator (32), wherein the manipulator (32) has a first gripping unit (33) and a second gripping unit (34), wherein the workpieces (2) already processed are removed from the pallet (20) by means of the first gripping unit (33) and new workpieces (2) received in the second gripping unit (34) are subsequently placed on the pallet (20).

## Revendications

1. Machine-outil (1) pour l'usinage de pièces (2) par enlèvement de copeaux, comprenant :
- un logement de broche (3) avec au moins une broche d'outil (4) pouvant être entraînée en rotation par rapport à un axe de broche (8), dans lequel la broche d'outil (4) peut coulisser au moins le long d'un axe X horizontal (5) et le long d'un axe Z horizontal (6) perpendiculaire à l'axe X (5), dans lequel l'axe de broche (8) est parallèle à l'axe Z (6) ;
- un bâti de machine (10) avec un pont pivotant (11) qui est logé de façon à pouvoir être entraîné de manière pivotante autour d'un axe A (12) parallèle à l'axe X (5), dans lequel le pont pivotant (11) est conçu pour le logement d'une palette (20) pour au moins une des pièces à usiner (2) ;
- un espace d'usinage (21) qui se trouve au niveau du pont pivotant (11) et qui est accessible par un outil d'usinage (7) logé dans le logement de broche (3) ;
**caractérisée en ce que**
un réservoir de palettes (22) est prévu, qui est disposé de manière distante par rapport au pont pivotant (11) sur l'axe Z (6), dans lequel, dans le réservoir de palettes (22), se trouvent plusieurs compartiments de logement de palettes (25) superposés sur un axe Y (9), qui permettent le logement de palettes (20), dans lequel au moins un des compartiments de logement de palettes (25) comprend un système d'éjection horizontal (26) au moyen duquel une palette (20) logée dans le compartiment de logement de palette (25) correspondant peut coulisser le long de l'axe Z (6) vers l'intérieur de l'espace d'usinage (21), ce qui permet de rendre la palette (20) disponible pour un transfert vers le pont pivotant (11),
dans lequel le pont pivotant (11) est conçu de façon à pouvoir coulisser le long de l'axe Y vertical (9) par rapport au compartiment de logement de palettes (25) et le compartiment de logement de palettes (25) ne peut pas coulisser le long de l'axe Y vertical (9).

2. Machine-outil selon la revendication 1, **caractérisée en ce que** chacun des compartiments de logement de palettes (25) comprend un système d'éjection horizontal (26).

3. Machine-outil selon l'une des revendications précédentes, **caractérisée en ce que** le système d'éjection horizontal (26) est couplé en entraînement avec un moteur électrique, plus particulièrement un servomoteur.

4. Machine-outil selon l'une des revendications précédentes, **caractérisée en ce que** le système d'éjection horizontal (26) comprend un support de palette (27) qui est conçu pour le logement par complémentarité de forme de la palette (20).

5. Machine-outil selon la revendication 4, **caractérisée en ce que**, sur une face frontale du support de palette (27), est prévu un embout de maintien (29) dans lequel la palette (20) peut être accrochée.

6. Machine-outil selon la revendication 4 ou 5, **caractérisée en ce que** le support de palette (27) est couplé avec des rails d'éjection (28) qui sont fixés dans le réservoir de palettes (22), plus particulièrement à une paroi latérale.

7. Machine-outil selon l'une des revendications précédentes, **caractérisée en ce que** le réservoir de palettes (22) est couplé à un système d'approvisionnement en palettes (31) au moyen duquel les différents compartiments de logement de palettes (25) peuvent être munis de palettes (20).

8. Machine-outil selon l'une des revendications précédentes, **caractérisée en ce que** les palettes (20) peuvent être éjectées au moyen du système d'éjection horizontal (26) le long de l'axe Z (6) sur le côté opposé à l'espace d'usinage (21) ou le long de l'axe X (5) latéralement hors du réservoir de palettes (22).

9. Procédé de changement d'une palette (20) sur une machine-outil (1) selon l'une des revendications précédentes, **caractérisée en ce que** ce procédé comprend les étapes suivantes :
- mise à disposition d'une palette (20) munie de pièces (2) dans un compartiment de logement de palettes (25) d'un réservoir de palettes (22) ;
- positionnement relatif d'un pont pivotant (11) pour le logement de la palette (20), en direction d'un axe Y vertical (9) en dessous du niveau du compartiment de logement de palette (25) dans lequel la palette (20) doit être remplacée ;
- coulissement de la palette (20) le long d'un axe Z horizontal (6) vers un espace d'usinage (21) de la machine-outil (1) au moyen d'un système d'éjection horizontal (26) du réservoir de palettes (22) ;
- logement de la palette (20) au niveau du pont pivotant (11) pour coulissement relatif du pont pivotant (11) par rapport au compartiment de logement de palette (25) dans lequel la palette (20) doit être remplacée, jusqu'à ce que la palette repose sur le pont pivotant (11), dans lequel le positionnement relatif du pont pivotant (11), a lieu exclusivement par coulissement du pont pivotant (11) le long de l'axe Y vertical (9) en dessous du niveau du compartiment de logement de palette (25) dans lequel la palette (20) doit être remplacée et **en ce que** le logement de la palette (20) au niveau du pont pivotant (11) a lieu de façon à ce que le pont pivotant (11) coulisse le long de l'axe Y vertical (9) vers le haut jusqu'à ce que la palette (20) soit logée sur le pont pivotant (11) ;
- verrouillage de la palette (20) sur le pont pivotant (11).

10. Procédé selon la revendication 9, **caractérisé en ce que**, pour le logement de la palette (20) hors du système d'éjection horizontal (26), le pont pivotant (11) soit déplacé le long de l'axe Y vertical (9) vers le haut jusqu'à ce que la palette (20) s'appuie contre le pont pivotant (11) et **en ce que** la palette (20) est ensuite levée vers le haut hors du logement par complémentarité de forme du support de palette (27) le long de l'axe Y vertical (9) au moyen du pont pivotant (11).

11. Procédé selon l'une des revendications 9 à 10, **caractérisé en ce que**, après le levage de la palette (20) hors du logement du support de palette (27), le support de palette vide (27) est coulissé le long de l'axe Z horizontal (6) vers le réservoir de palettes (22).

12. Procédé selon l'une des revendications 9 à 11, **caractérisé en ce que**, pour le retrait de la palette (20) logée sur le pont pivotant (11), dans une première étape, le pont pivotant (11) est coulissé le long de l'axe Y vertical (9) vers le haut jusqu'à ce que la palette (20) soit disposée, par rapport à l'axe Y (9), au-dessus du niveau du compartiment de logement de palette (25) dans lequel la palette (20) doit être logée, dans lequel, dans une étape suivante, le support de palette (27) correspondant au compartiment de logement de palette (25) est coulissé le long d'un axe Z horizontal (6) vers un espace d'usinage (21) de la machine-outil (1) puis le pont pivotant (11) est coulissé le long de l'axe Y vertical (9) vers le bas jusqu'à ce que la palette (20) soit logée sur le support de palette (27).

13. Procédé selon l'une des revendications 10 à 12, **caractérisé en ce que**, après le changement de la palette (20), les pièces (2) qui sont serrées sur la palette (20) se trouvant dans l'espace d'usinage (21) sont usinées au moyen de l'outil d'usinage (7) et, en même temps, au niveau de la palette (20) amenée hors de l'espace d'usinage (21) lors du processus de changement, les pièces (2) usinées sont retirées et la palette (20) est munie de nouvelles pièces (2).

14. Procédé selon la revendication 13, **caractérisé en ce que** la palette (20) amenée hors de l'espace d'usinage (21) est munie, au moyen d'un manipulateur (32), de nouvelles pièces (2), dans lequel le manipulateur (32) comprend une première unité de préhension (33) et une deuxième unité de préhension (34), dans lequel les pièces déjà usinées (2) sont retirées de la palette (20) au moyen de la première unité de préhension (33) puis, de nouvelles pièces (2), logées dans la deuxième unité de préhension (34), sont déposées sur la palette (20).
